# EUROPEAN PATENT SPECIFICATION

(11) **EP 4 211 198 B1**
(45) Date of publication and mention of the grant of the patent: **03.06.2026**
(21) Application number: 21789910.3
(22) Date of filing: 09.09.2021
(51) Int. Cl.: C09J 163/00, C08K 3/22, C08G 18/18, C08G 18/20, C08G 18/80, H01M 10/613, H01M 10/42, C09J 175/08, C08G 18/76, C08G 18/50, C08G 18/48, C08G 18/10, C08G 18/00, C08G 18/24, C09J 175/04, C08G 59/50, H01M 10/653

(54) **THERMAL INTERFACE MATERIAL**
WÄRMELEITPASTE
PÂTE THERMIQUE

(30) Priority: 14.09.2020 US 202063077866 P
(43) Date of publication of application: 19.07.2023
(73) Proprietor: DDP Specialty Electronic Materials US, LLC, Wilmington, DE 19805 (US); DDP Specialty Products Japan K. K., Tokyo 100-611 (JP)
(72) Inventor: GRUNDER, Sergio, 8807 Freienbach (CH); ASCHWANDEN, Marcel, 8807 Freienbach (CH); TAKAHASHI, Tomonori, Utsunomiya-shi, Tochigi 321-3231 (JP); LUTZ, Andreas, 8807 Freienbach (CH)
(74) Representative: Abitz & Partner
(86) International application number: PCT/US2021/049615
(87) International publication number: WO 2022/056096

(56) References cited:
- US-A- 4 803 257
- US-A1- 2017 288 279
- US-A1- 2018 258 329
- DATABASE WPI Week 202007, Derwent World Patents Index; AN 2020-81161K, XP002804841

## Description

### Field of Invention

The present invention relates to the field of two-component thermally conductive adhesive formulations and interface materials.

### Background of the Invention

The automotive industry has seen a trend to reduce the weight of vehicles in recent decades. This trend has been driven mainly by regulations to reduce the CO₂ emission of the vehicle fleet. In recent years lightweight construction strategies have been further fueled by the increasing number of electrically driven vehicles. The combination of a growing automotive market and a growing market share of electrically driven vehicles leads to a strong growth in the number of electrically driven vehicles. To provide long driving ranges in electrical vehicles, batteries with a high energy density are needed. Several battery strategies are currently followed with differing detailed concepts, but what all long range durable battery concepts have in common is that a thermal management is needed.

To thermally connect battery cells or modules to the cooling unit thermal interface materials are needed. Battery cells produce heat during charging and discharging operations. The cells need to be kept in the right operating temperature (preferably 25-40°C) not to lose efficiency. Furthermore, overheating can start a dangerous thermal runaway reaction. For that reason active cooling is commonly used. In such systems, cooled water glycol mixtures are pumped through channels that cool the metal bottom plate on which the battery cells/modules are placed. In order not to have an insulating air film between the cells and cooling plate, thermal interface materials are employed. The thermal interface materials (TIMs) need to thermally connect the modules with the cooling plate, meaning they must have a high thermal conductivity of > 2 W/mK. Such elevated thermal conductivities can be achieved by formulating a polymeric matrix, such as epoxy, with high amounts (typically > 50 wt%) of thermally conductive fillers such as aluminum hydroxide, aluminum oxide, as disclosed in WO2014047932A1.

The use of multimodal aluminum trihydroxide (ATH) or aluminum oxide is reported to reach high thermal conductivities.

In most battery applications of TIMs, the TIM serves a dual role of providing thermal conductivity for cooling and also mechanical fixation of the battery modules to protect them and keep them in place. For certain battery designs and OEM requirements, high lap shear strengths and cohesive failure modes are needed, so that long term fatigue tests are passed. This renders the battery system robust even after extensive dynamic vibration exposures. Most two-component polyurethane-based TIMs lack sufficient high lap shear strength and good adhesion to the substrate.

CN 111 534 268 A relates to a thermally conductive adhesive based on NCO prepolymer, liquefied MDI, chain extender and alumina. US 4 803 257 A relates to a structural adhesive based on phenol-blocked NCO prepolymer, polyamine, polyepoxy compound and optionally alumina.

There is a need for TIMs having good thermal conductivity and good adhesive properties and fatigue performance.

### Summary of the Invention

The invention is set out in the appended set of claims.

In a first aspect, the invention provides a kit for a two-component thermally conductive adhesive formulation comprising:
(A) a first part, comprising:
   (a1) a blocked polyurethane prepolymer which is the reaction product of a polyisocyanate with a polyol, capped with a phenol;
   (a2) an aromatic epoxy resin;
   (a3) an epoxy silane;
(B) a second part, comprising:
   (b1) a nucleophilic cross-linker capable of reacting with the blocked polyurethane prepolymer (a1) and the aromatic epoxy resin (a2);
   (b2) a catalyst capable of promoting the reaction of nucleophile (b1) with the blocked polyurethane prepolymer (a1) and the aromatic epoxy resin (a2);
wherein Part (A) and/or Part (B) further comprise a thermally conductive filler, and Parts (A) and (B) are designed to be blended together prior to use.

In a second aspect, the invention provides a cured thermally conductive adhesive, resulting from mixing Parts (A) and (B) and allowing curing to occur.

In a third aspect, the invention provides a battery assembly comprising battery modules fixed in place in the assembly by a cured adhesive composition resulting from mixing Parts (A) and (B), and optionally mechanical fastening means, such that the adhesive composition provides thermal conductivity between the battery modules and a cooling substrate.

In a fourth aspect, the invention provides a method for assembling a battery assembly, comprising the steps:
(1) blending Parts (A) and (B) to produce a blended adhesive; AND
(2) applying the blended adhesive to fix battery modules in place and provide thermal conductivity.

The invention further provides a kit as described in claims 2 to 13.

### Detailed Description of the Invention

The inventors have surprisingly found that in a thermally conductive adhesive (thermal conductivity of > 2 W/mK) the addition of an aromatic epoxy resin and an epoxy silane in combination with a blocked polyurethane prepolymer leads to high cohesive failure mode at lap shear strengths higher than 0.8 MPa, as well as good fatigue performance.

### Definitions and abbreviations

- MDI: 4,4'-Methylenebis(phenyl isocyanate)
- HDI: Hexamethylene diisocyanate

Molecular weights of polymers as reported herein are reported in Daltons (Da) as number or weight average molecular weights, as determined by size exclusion chromatography (SEC).

In one embodiment, the invention provides a kit for a two-component thermally conductive adhesive formulation comprising:
(A) a first part, comprising:
   (a1) a blocked polyurethane prepolymer which is the reaction product of a polyisocyanate with a polyol, capped with a phenol;
   (a2) an aromatic epoxy resin;
   (a3) an epoxy silane;
(B) a second part, comprising:
   (b1) a nucleophilic cross-linker capable of reacting with the blocked polyurethane prepolymer (a1) and the aromatic epoxy resin (a2);
   (b2) a catalyst capable of promoting the reaction of nucleophile (b1) with the blocked polyurethane prepolymer (a1) and the aromatic epoxy resin (a2);
wherein Part (A) and/or Part (B) further comprise a thermally conductive filler, and parts (A) and (B) are designed to be blended together prior to use.

### Thermally conductive filler

The thermally conductive filler is not particularly limited.

Suitable thermally conductive fillers are those that have a coefficient of thermal conductivity that is greater than 5 W/m°K, greater than 10 W/m°K, or greater than 15 W/m°K. Examples of thermally conductive fillers include alumina, alumina trihydrate or aluminum trihydroxide, silicon carbide, boron nitride, diamond, and graphite, or mixtures thereof. Particularly preferred are aluminium trihydroxide (ATH), and aluminium oxide, with ATH being the most preferred.

In a preferred embodiment, the thermally conductive filler has a broad particle size distribution characterized by a ratio of D90 / D50 of at or about 3 or more. Particularly preferably the thermally conductive filler is ATH or aluminium oxide having a broad particle size distribution characterized by a ratio of D90 / D50 of at or about 3 or more, most preferably ATH.

Also preferred are thermally conductive fillers having a bimodal particle size distribution. A bimodal distribution is when, for example, the ratio D₉₀ / D₅₀ is at or about 3 or more, more preferably at or about 5 or more, more particularly preferably at or about 9 or more. For example, particles having a D₅₀ of 5 to 20 microns and a D₉₀ of 70 to 90 microns, particularly a D₅₀ of 7-9 microns and a D₉₀ of 78-82 microns. Particle size can be determined using laser diffraction. For ATH a suitable solvent is deionized water containing a dispersion aid, such as Na₄P₂O₇ x 10 H₂O, preferably at 1 g/l. Preferred are aluminium oxide and ATH having a bimodal distribution, particularly ATH.

The thermally conductive filler is preferably present in the final adhesive at a concentration that gives a thermal conductivity of at or about 2.0 W/mK or more, preferably at or about 2.5 or more, more preferably at or about 2.8 or more, even more preferably at or about 2.9 or more, and most preferably at or about 3.0 or more. For example, this generally requires a concentration of thermally conductive filler of greater than 50 wt%, more preferably greater than 60 wt%, more particularly preferably greater than 70 wt%. In a particularly preferred embodiment, the thermally conductive filler is present at greater than 80 wt%. Preferably the thermally conductive filler content in the final adhesive is less than 93 wt%, as higher levels can affect the adhesive strength and impact resistance negatively. In a particularly preferred embodiment, the thermally conductive filler is present at 85-90 wt%.

The thermally conductive filler may be present in Part (A), Part (B) or both. In a preferred embodiment it is present in both Part (A) and Part (B), as this reduces the amount of mixing required to properly distribute the thermally conductive filler when Parts (A) and (B) are mixed. Preferably it is present at similar or the same concentration in both Parts (A) and (B). In a particularly preferred embodiment it is present at 85-90 wt% in the final mixture of Parts (A) and (B), based on the total weight of the mixture. Preferably it is present both Parts (A) and (B) at 85 wt%.

In a particularly preferred embodiment, the thermally conductive filler is ATH having a ratio D₉₀ / D₅₀ of at or about 8 or more, used at a concentration of 85-89 wt% in both Parts (A) and (B), based on the total weight of Part (A) or Part (B).

### Blocked polyurethane prepolymer (a1)

Part (A) of the adhesive composition comprises a blocked polyurethane prepolymer which is the reaction product of a polyisocyanate with a polyol, capped with a phenol, preferably 70-85 wt% aromatic polyisocyanate with 15-25 wt% phenol. Preferably the reaction is carried out with a tin catalyst.

The polyisocyanate may be aliphatic, aromatic, or a mixture, with aromatic polyisocyanates being preferred. Examples of aromatic polyisocyanates include methylene diphenyl diisocyanate (MDI), toluene diisocyanate (TDI), p-phenylene diisocyanate (PPDI), and naphthalene diisocyanate (NDI), all of which can be reacted with a polyol. Particularly preferred is toluene diisocyanate (TDI), reacted with a polyol.

The polyol preferably is a polyether polyol. The polyol may have two or more OH groups. Examples of polyether polyols include poly(alkylene oxide)diols, wherein the alkylene group is C₂-C₆, particularly preferably the alkylene group is C₂-C₄. Examples of suitable polyols include poly(ethylene oxide)diol, poly(propylene oxide)diol, poly(tetramethylene oxide)diol. Particularly preferred is poly(propylene oxide)diol, particularly poly(propylene glycol).

Particularly preferred is the reaction product of an aromatic diisocyanate with a polyether polyol, in particular those listed above, and then capping with a phenol.

The phenol used for capping is preferably a phenol of the following formula: 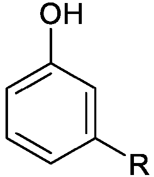 where R is a saturated or unsaturated C₁₅ chain, particularly preferably R is a saturated C₁₅ chain.

Particularly preferred is a polyisocyanate made by reacting TDI with a poly(propylene oxide)diol, in particular when the resulting polyisocyanate has an equivalent weight of at or about 950.

The phenol-containing compound typically has a linear hydrocarbon attached to the phenol group to provide some aliphatic characteristics to the compound. The linear hydrocarbon preferably includes 3 or more carbon atoms, more preferably 5 or more carbon atoms, even more preferably 8 or more carbon atoms, and most preferably 10 or more carbon atoms. The linear hydrocarbon preferably includes at or about 50 or less carbon atoms, at or about 30 or less carbon atoms, at or about 24 or less carbon atoms, or at or about 18 or less carbon atoms. A particularly preferred phenol is cardanol.

In a particularly preferred embodiment, the blocked polyurethane prepolymer is made by reacting toluene diisocyanate with a polyether polyol, having an NCO content of at or about 4 - 5% and an equivalent weight of at or about 500 - 1500 g/eq.

In another preferred embodiment, the blocked polyurethane prepolymer is made by reacting an aromatic polyisocyanate based on toluene diisocyanate with cardanol, preferably 70-85 wt% TDI-based polyisocyanate with 15-25 wt% cardanol. Preferably the reaction is carried out with a tin catalyst.

Molecular Weight data of the polyurethane prepolymers were measured by gel permeation chromatography (GPC) with a Malvern Viscothek GPC max equipment. EMSURE - THF (ACS , Reag. Ph EUR for analysis) was used as an eluent, PL GEL MIXED D (Agilent , 300*7.5 mm , 5 µm ) was used as a column, and MALVERN Viscotek TDA was used as a detector.

The blocked polyurethane prepolymer (a1) is preferably present in Part (A) at a concentration of 0.5 to 5 wt%, more preferably at 1 to 3 wt%, particularly preferably at 1.5 to 2.2 wt%, based on the total weight of Part (A).

In a preferred embodiment, the blocked polyurethane prepolymer is made by reacting TDI with a poly(propylene oxide)diol, in particular when the resulting polyisocyanate has an equivalent weight of at or about 950, and capping with cardanol, at 1.5 to 2.2 wt%, preferably at or about 2 wt%, based on the total weight of Part (A).

In use, Parts (A) and (B) are mixed prior to or simultaneously with application to a substrate. The concentration of the blocked polyurethane prepolymer in the final, mixed adhesive can be calculated from the proportions of Parts (A) and (B) used to make the final mixed adhesive. In a preferred embodiment, Parts (A) and (B) are mixed in a 1:1 ratio by volume, in which case the concentration of the blocked polyurethane prepolymer in the final adhesive will be half the value in Part (A).

### Aromatic epoxy resin (a2)

Part (A) comprises an aromatic epoxy resin. The aromatic epoxy resin is preferably a reaction product of a diphenol with epichlorohydrin. Examples of suitable diphenols include bisphenol A, bisphenol F, with bisphenol A being particularly preferred.

In a particularly preferred embodiment, the aromatic epoxy resin is a reaction product of epichlorohydrin and bisphenol A, having the following characteristics:

| **Typical properties** | | |
|---|---|---|
| **Property** | **Value** | **Method** |
| Epoxide equivalent weight (g/eq) | 176-185 | ASTM D-1652 |
| Epoxide % | 23.2-24.4 | ASTM D-1652 |
| Epoxide group content (mmol/kg) | 5400-5680 | ASTM D-1652 |
| Viscosity @ 25°C (mPA·s) | 7000-10000 | ASTM D-445 |
| Hydrolyzable chloride content | 500 Max. | ASTM D-1726 |
| Water content (ppm) | 700 Max. | ASTM E-203 |
| Density @ 25°C (g/ml) | 1.16 | ASTM D-4052 |
| Epichlorohydrin content (ppm) | 5 Max. | DowM 101321 |

The aromatic epoxy resin is preferably present in Part (A) at a concentration of 0.3 to 2 wt%, more preferably at 0.6 to 1.5 wt%, particularly preferably at 1 to 1.2 wt%, based on the total weight of Part (A).

In a preferred embodiment, the aromatic epoxy resin is a reaction product of epichlorohydrin and bisphenol A, having the following characteristics:

| **Typical properties** | | |
|---|---|---|
| **Property** | **Value** | **Method** |
| Epoxide equivalent weight (g/eq) | 176-185 | ASTM D-1652 |
| Epoxide % | 23.2-24.4 | ASTM D-1652 |
| Epoxide group content (mmol/kg) | 5400-5680 | ASTM D-1652 |
| Viscosity @ 25°C (mPAs) | 7000-10000 | ASTM D-445 |
| Hydrolyzable chloride content | 500 Max. | ASTM D-1726 |
| Water content (ppm) | 700 Max. | ASTM E-203 |
| Density @ 25°C (g/ml) | 1.16 | ASTM D-4052 |
| Epichlorohydrin content (ppm) | 5 Max. | DowM 101321 |

at 1 to 1.2 wt%, based on the total weight of Part (A).

In use, Parts (A) and (B) are mixed prior to or simultaneously with application to a substrate. The concentration of the aromatic epoxy resin in the final, mixed adhesive can be calculated from the proportions of Parts (A) and (B) used to make the final mixed adhesive. In a preferred embodiment, Parts (A) and (B) are mixed in a 1:1 ratio by volume, in which case the concentration of the aromatic epoxy resin in the final adhesive will be half the value in Part (A).

### Epoxy silane (a3)

Part (A) comprises an epoxy silane. An epoxy silane is any molecule that bears a di- or trialkoxy silane moiety bonded to an epoxy moiety. Suitable epoxy silanes are of the formula: 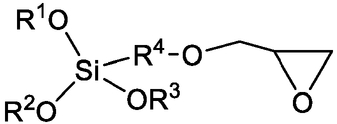 where R¹, R² and R³ are independently selected from C₁-C₃ alkyl, and R⁴ is a divalent organic radical.

In preferred embodiments, R¹, R² and R³ are independently selected from ethyl and methyl, with methyl being preferred, particularly when R¹, R² and R³ are methyl.

R⁴ is preferably selected from alkylene, preferably C₂-C₁₂ alkylene, more preferably C₂-C₆ alkylene, particularly preferably propylene.

In a particularly preferred embodiment, the epoxy silane is gammaglycidoxypropyltrimethoxysilane.

The epoxy silane is preferably present in Part (A) at 0.2 to 0.75 wt%, more preferably 0.25 to 0.6 wt%, particularly preferably at or about 0.5 wt%, based on the total weight of Part (A).

In a particularly preferred embodiment, the epoxy silane is gammaglycidoxypropyltrimethoxysilane at 0.2 to 0.75 wt%, more preferably 0.25 to 0.6 wt%, particularly preferably at or about 0.5 wt%, based on the total weight of Part (A).

In use, Parts (A) and (B) are mixed prior to or simultaneously with application to a substrate. The concentration of the epoxy silane in the final, mixed adhesive can be calculated from the proportions of Parts (A) and (B) used to make the final mixed adhesive. In a preferred embodiment, Parts (A) and (B) are mixed in a 1:1 ratio by volume, in which case the concentration of the epoxy silane in the final adhesive will be half the value in Part (A).

### Nucleophilic cross-linker (b1)

Part (B) comprises a nucleophilic cross-linker capable of reacting with the blocked polyurethane prepolymer (a1) and the aromatic epoxy resin (a2).

The nucleophilic cross-linker is preferably a di- or tri-amine, with triamines being preferred. The amine groups may be independently secondary or primary, with primary being preferred.

The nucleophilic cross-linker preferably has a molecular weight of 1,500 to 4,000 Da, more preferably 2,000 to 3,500 Da, with at or about 3,000 Da being particularly preferred.

The nucleophilic cross-linker preferably has a backbone based on poly(alkylene oxide)diols, particularly C₂-C₆ alkylene, more particularly C₂-C₄ alkylene, with C₃ alkylene being most preferred. Particularly preferably the backbone is based on a polyether of propylene glycol.

In a particularly preferred embodiment, the nucleophilic cross-linker is a triamine having primary amines for greater than 90 % of amine groups, a molecular weight of at or about 3,000 Da, and a backbone based on a polyether of propylene glycol.

More particularly preferably, the nucleophilic cross-linker is a trifunctional polyether amine of approximately 3000 molecular weight, 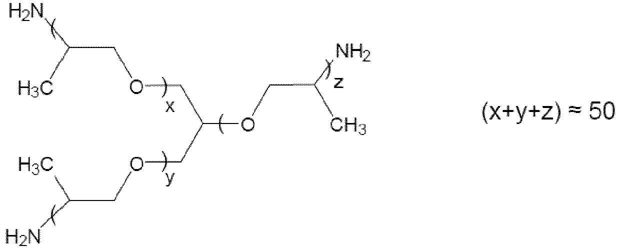 having the following characteristics:

| **Typical properties** | |
|---|---|
| **Property** | **Value** |
| Primary amine, % of total amine | > 97 |
| Total acetylatables | 0.96-1.06 meq/g |
| Total amine | 0.90-0.98 meq/g |
| Water | < 0.25 wt% |
| Amine hydrogen equivalent | 530 g/eq |
| Viscosity @ 25°C | 367 cSt |
| Density @ 25°C | 0.996 g/ml |

The nucleophilic cross-linker is preferably present in Part (B) at a concentration of 0.1 to 10 wt%, 1 to 5 wt%, more preferably 1.5 to 3.3 wt%, particularly preferably at 3 to 3.2 wt%, based on the total weight of Part (B).

In a particularly preferred embodiment, the nucleophilic cross-linker is a trifunctional polyether amine of approximately 3000 molecular weight, 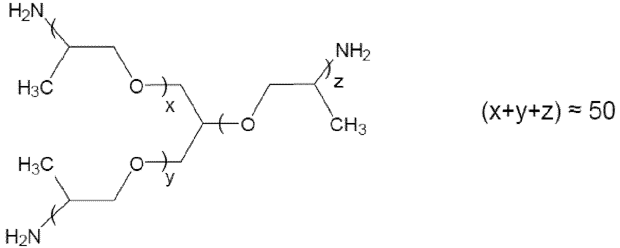 having the following characteristics:

| **Typical properties** | |
|---|---|
| **Property** | **Value** |
| Primary amine, % of total amine | > 97 |
| Total acetylatables | 0.96-1.06 meq/g |
| Total amine | 0.90-0.98 meq/g |
| Water | < 0.25 wt% |
| Amine hydrogen equivalent | 530 g/eq |
| Viscosity @ 25°C | 367 cSt |
| Density @ 25°C | 0.996 g/ml |

at 3-3.2 wt%, based on the total weight of Part (B).

In use, Parts (A) and (B) are mixed prior to or simultaneously with application to a substrate. The concentration of the nucleophilic cross-linker in the final, mixed adhesive can be calculated from the proportions of Parts (A) and (B) used to make the final mixed adhesive. In a preferred embodiment, Parts (A) and (B) are mixed in a 1:1 ratio by volume, in which case the concentration of the nucleophilic cross-linker in the final adhesive will be half the value in Part (A).

### Catalyst (b2)

Part (B) comprises a catalyst capable of promoting the reaction of nucleophile (b1) with the blocked polyurethane prepolymer (a1) and the aromatic epoxy resin (a2).

The catalyst is preferably selected from Lewis bases and Lewis acids. Preferred are tertiary amines, including diazabicyclo[2.2.2]octane, 2,4,6-tris((dimethylamino)methyl)phenol, DMDEE (2,2'-Dimorpholinodiethylether), imidazoles, such as 4-methylimidazole), triethanolamine, polyethyleneimine.

Also suitable are organotin compounds, such as dioctyltindineodecanoate, and other metal catalysts such as tetrabutyltitanate, zirconium acetylacetonate, and bismuthneodecanoate.

Particularly preferred is diazabicyclo[2.2.2]octane.

The catalyst is preferably used at 0.05 to 0.2 wt%, more preferably 0.075 to 0.15 wt%, more particularly preferably at or about 0.1 wt%, based on the total weight of Part (B).

### Other ingredients

Parts (A) and (B) may additionally comprise other ingredients such as:
- Plasticizers, such as esters of unsaturated fatty acids, in particular C₁₆-C₁₈ fatty acids, in particular methyl esters, tris(2-ethylhexyl)phosphate;
- Stabilizers, such as polycapralactone;
- Dyes and colorants;
- Fillers (other than the thermally conductive filler), such as carbon black, calcium carbonate, glass fibres, wollastonite;
- Viscosity reducers, such as hexadecyltrimethoxysilane.

### Cured thermally conductive adhesive

The invention also provides a cured thermally conductive adhesive, resulting from mixing Parts (A) and (B) and allowing curing to occur.

Parts (A) and (B) may be mixed in any proportion. Preferably the final concentrations of the ingredients fall within the following ranges after mixing (A) and (B):

| **Ingredient** | **Preferred (wt%)** | **More preferred (wt%)** | **More particularly preferred (wt%)** |
|---|---|---|---|
| (a1) blocked polyurethane prepolymer | 0.1-5 | 0.25-2.5 | 0.5-2 |
| (a2) aromatic epoxy resin | 0.1-5 | 0.2-4 | 0.4-1 |
| (a3) epoxy silane | 0.1-1 | 0.2-0.8 | 0.3-0.6 |
| (b1) nucleophilic cross-linker | 0.2-5 | 0.3-4 | 0.5-2 |
| (b2) catalyst | 0.01-0.5 | 0.03-0.3 | 0.05-0.15 |

### Application to substrate

Parts (A) and (B) are mixed and can be applied to a substrate using known methods, such as a manual application system or in an automated way with a pump system using 20l pails or 200 l drums or any other preferred container.

### Characteristics

The cured adhesive composition is characterized by a thermal conductivity, measured according to ASTM 5470-12 (as described in the Examples), of about 2.0 W/mK or more (preferably at or about 2.5 or more, more preferably at or about 2.8 or more, even more preferably at or about 2.9 or more, and most preferably at or about 3.0 or more).

The cured adhesive composition preferably has a lap shear strength, according to DIN EN 1465:2009, as measured in the Examples, of greater than 0.7 MPa, more preferably greater than 0.8 or 0.9 MPa.

The two-part composition cures at room temperature (preferably as characterized by an increase in a press-in force of about 100% or more, after aging for 24 hours after mixing).

### Battery assembly and method of assembly

The invention also provides a battery assembly comprising battery modules fixed in place in the assembly by a cured adhesive composition and/or by mechanical fastening means, resulting from mixing Parts (A) and (B), such that the mixture, when cured, provides thermal conductivity between the cells and the substrate.

Parts (A) and (B) are mixed in the desired ratio, and the mixture is applied, before curing, in a manner to separate the battery cells physically and electrically and to fix the cells in place on a substrate designed to cool the cells, such that the mixture, when cured, provides thermal conductivity between the cells and the substrate.

The thermal conductivity of the adhesive in the assembly, measured according to ASTM 5470-12 (as described in the Examples), is preferably 2.0 W/mK or more, more preferably at or about 2.5 or more, more particularly preferably at or about 2.8 or more.

### EXAMPLES

| **Table 1. Ingredients** | | |
|---|---|---|
| **Trademark or abbreviation** | **Chemistry** | **Function** |
| Silane A | hexadecyltrimethoxysilane | Viscosity reducer for high filler loadings |
| Epoxy Silane A | GammaGlycidoxypropyltrimethoxysilane | Epoxy silane (a3) |
| D.E.R.^{™} 732P Epoxy Resin | reaction product of epichlorohydrin and polypropylene glycol | Aliphatic epoxy resin |
| D.E.R. 330 Epoxy Resin | Reaction product of epichlorohydrin and bisphenol A | Aromatic epoxy resin (a2) |
| Triamine A | polyetheramine that is a triamine of approximately 3000 molecular weight | nucleophilic cross-linker (b1) |
| Diamine A | Polyoxypropylenediamine: a member of a family of polyamines having repeat oxypropylene units in the backbone, a difunctional primary amine with an average molecular weight of approximately 2000. Its amine groups are located on secondary carbon atoms at the ends of an aliphatic polyether chain. | nucleophilic cross-linker (b1) |
| Calcium carbonate | Precipitated calcium carbonate | Antisettling agent |
| Plasticizer A | Methyl ester of unsaturated C₁₆-C₁₈ fatty acid | Plasticizer |
| Plasticizer B | tris(2-ethylhexyl)phosphate | Plasticizer |
| ATH | Aluminium trihydroxide | Thermally conductive filler |
| Catalyst A | tris-2,4,6-dimethylaminomethyl phenol | Catalyst (b2) |
| Catalyst B | dioctyl tin dineodecanoate | Catalyst (b2) |
| CATALYST C | 33 wt% 1,4-diazabicyclo[2.2.2]octane in dipropylene glycol | Catalyst (b2) |
| Aromatic polyisocyanate A | Aromatic polyisocyanate based on toluene diisocyanate and poly(propylene oxide)diol. | Polyisocyanate used to make blocked polyurethane prepolymer (a1) |
| | DESMODUR E 15 has an equivalent weight (avg) of 950 | |
| Cardanol | High-purity cardanol | Phenol used to make blocked polyurethane prepolymer (a1) |
| DABCO T-12N | Dibutyltin dilaurate | Catalyst used to synthesize blocked polyurethane prepolymer (a1) |
| GF200 | Reaction product of AROMATIC POLYISOCYANATE A and Cardanol. Synthesis described below. | Blocked polyurethane prepolymer (a1) |

**Blocked polyurethane prepolymer GF200:** GF200 is the reaction product of Aromatic polyisocyanate A and Cardanol. Reaction procedure: Cardanol (22.1 wt%) and Aromatic polyisocyanate A (77.85 wt%) were heated in a reactor to 60°C. Dibutyltin dilaurate catalyst (0.05 wt%) was then added. The reaction mixture was stirred for 45 min at 80°C under an atmosphere of nitrogen and then for 10 min under vacuum. The colourless reaction product was then cooled to RT and transferred into a container.

### D.E.R. Epoxy Resin [aromatic epoxy resin (a2)]

Reaction product of epichlorohydrin with bisphenol A, having the following properties:

| **Typical properties** | | |
|---|---|---|
| **Property** | **Value** | **Method** |
| Epoxide equivalent weight (g/eq) | 176-185 | ASTM D-1652 |
| Epoxide % | 23.2-24.4 | ASTM D-1652 |
| Epoxide group content (mmol/kg) | 5400-5680 | ASTM D-1652 |
| Viscosity @ 25°C (mPA·s) | 7000-10000 | ASTM D-445 |
| Hydrolyzable chloride content | 500 Max. | ASTM D-1726 |
| Water content (ppm) | 700 Max. | ASTM E-203 |
| Density @ 25°C (g/ml) | 1.16 | ASTM D-4052 |
| Epichlorohydrin content (ppm) | 5 Max. | DowM 101321 |

### Diamine A [nucleophilic cross-linker (b1)]

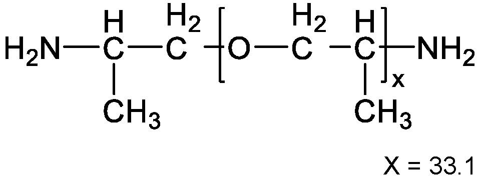

Diamine A is a member of a family of polyamines having repeat oxypropylene units in the backbone. As shown by the above structure, Diamine A is a difunctional primary amine with an average molecular weight of approximately 2000. Its amine groups are located on secondary carbon atoms at the ends of an aliphatic polyether chain.

### Triamine A [nucleophilic cross-linker (b1)]

Triamine A is a trifunctional polyether amine of approximately 3000 molecular weight.

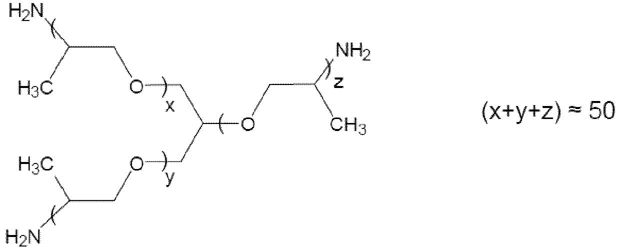

It has the following characteristics:

| **Typical properties** | |
|---|---|
| **Property** | **Value** |
| Primary amine, % of total amine | > 97 |
| Total acetylatables | 0.96-1.06 meq/g |
| Total amine | 0.90-0.98 meq/g |
| Water | < 0.25 wt% |
| Amine hydrogen equivalent | 530 g/eq |
| Viscosity @ 25°C | 367 cSt |
| Density @ 25°C | 0.996 g/ml |

### ATH [thermally conductive filler]

Bimodally distributed ATH was used, having the following characteristics:

| **Feature** | **Measure** | |
|---|---|---|
| Al(OH)₃ content | 99.7 wt% | |
| Moisture | 0.1 wt% | |
| Loss on ignition | 34.6 wt% | |
| Particle size (laser diffraction in deionized water, with 1 g Na₄P₂O₇ x 10 H₂O dispersion aid in 1 I) | D₁₀ [micron] | 0.5 |
| | D₅₀ [micron] | 8 |
| | D₉₀ [micron] | 80 |
| Sieve analysis (> 45 micron) | 35% | |
| Specific surface area (BET) | 1.2 m²/g | |
| Bulk density | 550 kg/m³ | |
| Oil absorption | 12 ml/100 g | |
| Specific conductivity | 50 µS/cm | |
| Refractive index | 1.58 | |
| Mohs hardness | 3 | |
| Density | 2.4 g/cm³ | |

### Preparation of A and B parts

The experimental formulations were prepared by mixing the ingredients listed in Table 2 on a planetary mixer or on a dual asymmetric centrifuge. In a first phase the liquid phases were mixed before the solid material is added to the formulation. The formulation was mixed for ca 30 min under vacuum before being filled into cartridges, pails, or drums.

### Formulation of adhesive

The A and B components of the adhesive were mixed 1:1 by volume with a static mixer and applied from a manual cartridge system.

### Test methods

### Press-in force

Press-in force was measured with a tensiometer (Zwick). The adhesive material was placed on a metal surface. An aluminium piston with 40 mm diameter is placed on top and the material is compressed to 5 mm (initial position). The material was then compressed to 0.3 mm with 1 mm/s velocity and force deflection curve was recorded. The force (N) at 0.5 mm thickness is then reported in Table 2 and considered as the press-in force.

### Thermal conductivity

Thermal conductivity was measured according to ASTM 5470-12 on a thermal interface material tester from ZFW Stuttgart. The tests were performed in Spaltplus mode at a thickness of between 1.8 - 1.2 mm. The described thermal interface material was considered as Type I (viscous liquids) as described in ASTM 5470-12. The upper contact was heated to ca 40°C and the lower contact to ca 10°C, resulting in a sample temperature of ca 25°C. The A and B components of the adhesive were mixed with a static mixer when applied from a manual cartridge system. The results are listed in Table 2.

### Molecular weight

Molecular Weight data of the polyurethane prepolymers were measured by gel permeation chromatography (GPC) with a Malvern Viscothek GPC max equipment. EMSURE - THF (ACS , Reag. Ph EUR for analysis) was used as an eluent, PL GEL MIXED D ( Agilent , 300*7.5 mm, 5 µm ) was used as a column, and MALVERN Viscotek TDA was used as a detector.

### Lap shear tests

Lap shear strength was measured according to according to DIN EN 1465:2009. e-coated steel substrates (140 x 25 mm, 0.8 mm thick) were used. The substrates were cleaned with isopropanol before use. Parts (A) and (B) were mixed 1:1 by volume, and the resulting adhesive was applied on one substrate, before the second substrate was joined within 5 minutes. The thickness was adjusted to 1.4 mm, the overlap area was 25 mm x 25 mm. The material was allowed to cure and rested for 7 days at 23°C, 50 % relative humidity before the lap shear tests were performed. The lap shear samples were then mounted in a tensiometer and the lap shear tests were performed in the conventional way, using a pull speed of 1 mm/min. The force deflection curve was monitored and the strength at break is reported as lap shear strength in Table 2.

### Viscosity

Rheology measurements were performed on an Anton Paar MC 302 rheometer with a parallel plate geometry. 25 mm diameter plates were used, the gap was fixed at 0.5 mm. The formulation was brought between the two plates and a shear rate test was performed from 0.001 to 20 1/s. The viscosity at 10 1/s is reported in Table 2.

| **Table 2. Formulations and key performance data of comparative and inventive examples. (lap shear test failure modes: adhesive failure (AF), cohesive failure (CF), superficial cohesive failure (SCF, near to the surface)** | | | | | | | |
|---|---|---|---|---|---|---|---|
| | CE1 | CE2 | CE3 | CE4 | CE5 | E1 | E2 |
| | | | | | | | |
| ***Part (A)** - **Component*** | | | | | | | |
| GF200 (wt%) Blocked polyurethane prepolymer (a1) | 2 | 2 | 2 | 2 | 2 | 2 | 2 |
| EP resin 1 (DER 732p) (wt%) aliphatic epoxy | 0.5 | 1.13 | - | - | 1.13 | - | - |
| EP resin 2 (DER 330) (wt%) aromatic epoxy, (a2) | - | - | 0.5 | 1.13 | - | 1.13 | 1.13 |
| Epoxy Silane A (epoxvsilane) (wt%) (a3) | - | - | - | - | 0.5 | 0.5 | 0.25 |
| ATH bimodal (wt%) | 87.6 | 87.6 | 87.6 | 87.6 | 87.6 | 87.6 | 87.6 |
| Precipitated calcium carbonate (wt%) | 2 | 1.5 | 2 | 1.5 | 1.5 | 1.5 | 1.5 |
| PLASTICIZER A (plasticizer) | 3.35 | 3.27 | 3.35 | 3.27 | 3.02 | 3.02 | 3.14 |
| DISFLAMOL Tris(2-ethylhexyl)phosphate (wt%) (plasticizer) | 3.3 | 3.25 | 3.3 | 3.25 | 3.00 | 3.00 | 3.13 |
| Green color paste (wt%) | 0.1 | 0.1 | 0.1 | 0.1 | 0.1 | 0.1 | 0.1 |
| Silane A (hexadecyltrimethoxysilane) (wt%) | 1 | 1 | 1 | 1 | 1 | 1 | 1 |
| Capa 2201 (polvcapralactone) (wt%) (stabilizer) | 0.15 | 0.15 | 0.15 | 0.15 | 0.15 | 0.15 | 0.15 |
| | | | | | | | |
| **Results Part (A)** | | | | | | | |
| Viscosity at 10 s/s at 23 °C (Pa.s) | 128 | 121 | 134 | 146 | 65 | 150 | 104 |
| | | | | | | | |
| ***Part (B)** - **Component*** | | | | | | | |
| Triamine A (wt%) (b1) | 1.67 | 3.16 | 1.67 | 3.16 | 3.16 | 3.16 | 3.16 |
| Plasticizer A (wt%) (plasticizer) | 3.10 | 2.35 | 3.10 | 2.35 | 2.35 | 2.35 | 2.35 |
| Tris(2-ethylhexyl)phosphate (wt%) (plasticizer) | 3.08 | 2.34 | 3.08 | 2.34 | 2.34 | 2.34 | 2.34 |
| Silane A (hexadecyltrimethoxysilane) (wt%) | 1 | 1 | 1 | 1 | 1 | 1 | 1 |
| ATH bimodal (wt%) | 88.5 | 88.5 | 88.5 | 88.5 | 88.5 | 88.5 | 88.5 |
| Precipitated calcium carbonate (wt%) | 2 | 2 | 2 | 2 | 2 | 2 | 2 |
| Catalyst A (tris-2,4,6-dimethvlaminomethvl phenol) (wt%) (b2) | 0.4 | 0.4 | 0.4 | 0.4 | 0.4 | 0.4 | 0.4 |
| CATALYST C (wt%) (b2) | 0.1 | 0.1 | 0.1 | 0.1 | 0.1 | 0.1 | 0.1 |
| Capa 2201 (polycapralactone) (wt%) (stabilizer) | 0.15 | 0.15 | 0.15 | 0.15 | 0.15 | 0.15 | 0.15 |
| | | | | | | | |
| Results **Part (B)** | | | | | | | |
| Viscosity at 10 s/s at 23 °C (Pa.s) | 109 | 153 | 109 | 153 | 153 | 153 | 153 |
| | | | | | | | |
| ***RESULTS (A & B Component 1:1 v*/*v)*** | | | | | | | |
| | | | | | | | |
| Thermal Conductivity λ_{eff} at 3.0 mm (W/mK) | 2.87 | 2.78 | 2.77 | | 2.79 | 2.90 | 2.83 |
| Press-in Force at 0.5 mm, initial (N) | 133 | 157 | 129 | | 177 | | 159 |
| Lap Shear Strength (MPa) | 0.08 | 0.14 | 0.38 | 0.53 | 0.59 | 1.21 | 0.93 |
| Lap -shear tests failure mode | 90% AF | 100% AF | 80% AF | 100% CF | 80%AF | 100% CF | 100% CF |
| | 108 SCF | | 20% SCF | | 20% CF | | |
| | | | | | | | |

The results in Table 2 show that all compositions have acceptable thermal conductivity of greater than 2.5 W/m°K. However, Comparative Examples CE1 and CE2, which lack the aromatic epoxy resin (a2) and the epoxy silane (a3) have low press-in force, unacceptably low lap shear strengths and very high levels of adhesive failure. Comparative Examples CE3 and CE4 which have the aromatic epoxy resin (a2), but lack the epoxy silane (a3) also have unacceptably low lap shear strengths, and CE3 has a high level of adhesive failure. Comparative Example CE5, which lacks the aromatic epoxy resin (a2), but has the epoxy silane (a3) has an unacceptably low lap shear strength, and high level of adhesive failure.

In contrast, Examples 1 and 2, which are representative of the adhesives of the invention have higher thermal conductivities, excellent lap shear strengths, and 100% cohesive failure.

## Claims

1. A kit for a two-component thermally conductive adhesive formulation comprising:
(A) a first part, comprising:
(a1) a blocked polyurethane prepolymer which is the reaction product of a polyisocyanate with a polyol, capped with a phenol;
(a2) an aromatic epoxy resin;
(a3) an epoxy silane;
(B) a second part, comprising:
(b1) a nucleophilic cross-linker capable of reacting with the blocked polyurethane prepolymer (a1) and the aromatic epoxy resin (a2);
(b2) a catalyst capable of promoting the reaction of nucleophile (b1) with the blocked polyurethane prepolymer (a1) and the aromatic epoxy resin (a2);
wherein Part (A) and/or Part (B) further comprise a thermally conductive filler, and parts (A) and (B) are designed to be blended together prior to use.

2. The kit of claim 1, wherein the blocked polyurethane prepolymer (a1) is made by reacting an aromatic diisocyanate with a polyether polyol and capping with a phenol, preferably wherein the blocked polyurethane prepolymer (a1) is made by reacting TDI with poly(propylene oxide)diol and capping with cardanol.

3. The kit of claim 1 or 2, wherein the blocked polyurethane prepolymer (a1) is present at 1 to 3 wt%, based on the total weight of Part (A).

4. The kit of any one preceding claim, wherein the aromatic epoxy resin (a2) is a reaction product of a diphenol with epichlorohydrin, preferably wherein the aromatic epoxy resin (a2) is a reaction product of bisphenol A with epichlorohydrin.

5. The kit of any one preceding claim, wherein the aromatic epoxy resin (a2) is present at 0.6 to 1.5 wt%, based on the total weight of Part (A).

6. The kit of any one preceding claim, wherein the epoxy silane (a3) is of the formula: 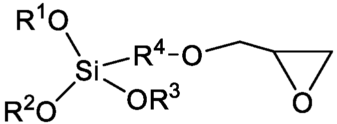 where R¹, R² and R³ are independently selected from C₁-C₃ alkyl, and R⁴ is a divalent organic radical, preferably wherein the epoxy silane (a3) is gammaglycidoxypropyltrimethoxysilane.

7. The kit of any one preceding claim, wherein the epoxy silane (a3) is present at 0.25 to 0.6 wt%, based on the total weight of Part A.

8. The kit of any one preceding claim, wherein the nucleophilic cross-linker (b1) is selected from diamines, triamines and mixtures of these, preferably wherein the nucleophilic cross-linker (b1) is a diamine having a backbone based on C₂-C₆-alkylene poly(alkylene oxide)diols, more preferably wherein the nucleophilic cross-linker (b1) is a triamine of approximately 3000 Da molecular weight, and having a backbone based on poly(propylene oxide)diol.

9. The kit of any one preceding claim, wherein the nucleophilic cross-linker (b1) is present at 1.5 to 3.3 wt%, based on the total weight of Part (B).

10. The kit of any one preceding claim, wherein the catalyst (b2) is selected from tertiary amines, including diazabicyclo[2.2.2]octane, 2,4,6-tris((dimethylamino)methyl)phenol, triethanolamine, DMDEE (2,2'-Dimorpholinodiethylether), polyethyleneimine and imidazoles, such as 4-methylimidazole, preferably wherein the catalyst (b2) is diazabicyclo[2.2.2]octane.

11. The kit of any one preceding claim, wherein the catalyst (b2) is present at 0.075 to 0.15 wt%, based on the total weight of Part (B).

12. The kit of any one preceding claim, wherein the thermally conductive filler is selected from alumina, aluminium oxide, alumina trihydrate or aluminum trihydroxide, silicon carbide, boron nitride, diamond, and graphite, or mixtures thereof, preferably wherein the thermally conductive filler is ATH, and/or wherein the thermally conductive filler has a bimodal particle size distribution **characterized by** a ratio of D90 / D50 of at or about 3 or more, and/or wherein the thermally conductive filler is present at 60 to 90 wt% in a mixture resulting from mixing Parts (A) and (B).

13. A cured thermally conductive adhesive, resulting from mixing Parts (A) and (B) as defined by any one preceding claim, and allowing the mixture to cure, wherein preferably the ingredients are at the following concentrations:
| **Ingredient** | **Preferred (wt%)** | **More preferred (wt%)** | **More particularly preferred (wt%)** |
|---|---|---|---|
| (a1) blocked polyurethane prepolymer | 0.1-5 | 0.25-2.5 | 0.5-2 |
| (a2) aromatic epoxy resin | 0.1-5 | 0.2-4 | 0.4-1 |
| (a3) epoxy silane | 0.1-1 | 0.2-0.8 | 0.3-0.6 |
| (b1) nucleophilic cross-linker | 0.2-5 | 0.3-4 | 0.5-2 |
| (b2) catalyst | 0.01-0.5 | 0.03-0.3 | 0.05-0.15 |

14. A battery assembly comprising battery modules fixed in place in the assembly by a cured adhesive composition resulting from mixing Parts (A) and (B), according to any one of claims 1 to 12, and optionally mechanical fastening means, such that the adhesive composition provides thermal conductivity between the battery modules and a cooling substrate.

15. A method for assembling a battery assembly, comprising the steps:
(1) blending Parts (A) and (B), according to any one of claims 1 to 12, to produce a blended adhesive; and
(2) applying the blended adhesive to fix battery modules in place and provide thermal conductivity.

## Patentansprüche

1. Kit für eine wärmeleitende Zweikomponenten-Klebstoffformulierung, umfassend:
(A) einen ersten Teil, umfassend:
(a1) ein blockiertes Polyurethan-Präpolymer, das das Reaktionsprodukt eines Polyisocyanats mit einem Polyol ist und mit einem Phenol überkappt ist;
(a2) ein aromatisches Epoxidharz;
(a3) ein Epoxysilan;
(B) einen zweiten Teil, umfassend:
(b1) einen nukleophilen Vernetzer, der mit dem blockierten Polyurethan-Präpolymer (a1) und dem aromatischen Epoxidharz (a2) reagieren kann;
(b2) einen Katalysator, der die Reaktion des Nukleophils (b1) mit dem blockierten Polyurethan-Präpolymer (a1) und dem aromatischen Epoxidharz (a2) fördern kann;
wobei Teil (A) und/oder Teil (B) ferner einen wärmeleitenden Füllstoff umfassen, und Teil (A) und (B) so konzipiert sind, dass sie vor Verwendung miteinander vermischt werden.

2. Kit nach Anspruch 1, wobei das blockierte Polyurethan-Präpolymer (a1) durch Umsetzen eines aromatischen Diisocyanats mit einem Polyetherpolyol und anschließendes Verkappen mit einem Phenol hergestellt wird, wobei vorzugsweise das blockierte Polyurethan-Präpolymer (a1) durch Umsetzen von TDI mit Poly(propylenoxid)diol und anschließendes Verkappen mit Cardanol hergestellt wird.

3. Kit nach Anspruch 1 oder 2, wobei das blockierte Polyurethan-Präpolymer (a1) in einer Menge von 1 bis 3 Gew.-%, basierend auf dem Gesamtgewicht von Teil (A), vorliegt.

4. Kit nach einem vorstehenden Anspruch, wobei das aromatische Epoxidharz (a2) ein Reaktionsprodukt eines Diphenols mit Epichlorhydrin ist, wobei das aromatische Epoxidharz (a2) vorzugsweise ein Reaktionsprodukt von Bisphenol A mit Epichlorhydrin ist.

5. Kit nach einem vorstehenden Anspruch, wobei das aromatische Epoxidharz (a2) in einer Menge von 0,6 bis 1,5 Gew.-%, basierend auf dem Gesamtgewicht von Teil (A), vorliegt.

6. Kit nach einem vorstehenden Anspruch, wobei das Epoxysilan (a3) die folgende Formel aufweist: 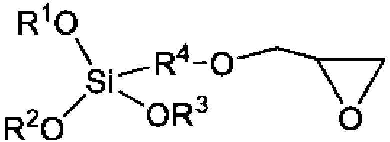 wobei R¹, R² und R³ unabhängig voneinander aus C₁-C₃-Alkyl ausgewählt sind und R⁴ ein zweiwertiges organisches Radikal ist, wobei das Epoxysilan (a3) vorzugsweise gamma-Glycidoxypropyltrimethoxysilan ist.

7. Kit nach einem vorstehenden Anspruch, wobei das Epoxysilan (a3) in einer Menge von 0,25 bis 0,6 Gew.-%, basierend auf dem Gesamtgewicht von Teil (A), vorliegt.

8. Kit nach einem vorstehenden Anspruch, wobei der nukleophile Vernetzer (b1) ausgewählt ist aus Diaminen, Triaminen und Mischungen davon, wobei der nukleophile Vernetzer (b1) vorzugsweise ein Diamin mit einem Rückgrat auf Basis von C₂-C₆-Alkylenpoly(alkylenoxid)diolen ist, wobei der nukleophile Vernetzer (b1) bevorzugter ein Triamin mit einem Molekulargewicht von etwa 3000 Da und einem Rückgrat auf Basis von Poly(propylenoxid)diol ist.

9. Kit nach einem vorstehenden Anspruch, wobei der nukleophile Vernetzer (b1) in einer Menge von 1,5 bis 3,3 Gew.-%, basierend auf dem Gesamtgewicht von Teil (B), vorliegt.

10. Kit nach einem vorstehenden Anspruch, wobei der Katalysator (b2) aus tertiären Aminen ausgewählt ist, einschließlich Diazabicyclo[2.2.2]octan, 2,4,6-Tris((dimethylamino)methyl)phenol, Triethanolamin, DMDEE (2,2'-Dimorpholinodiethylether), Polyethylenimin und Imidazole, wie z. B. 4-Methylimidazol, wobei der Katalysator (b2) vorzugsweise Diazabicyclo[2.2.2]octan ist.

11. Kit nach einem vorstehenden Anspruch, wobei der Katalysator (b2) in einer Menge von 0,075 bis 0,15 Gew.-%, basierend auf dem Gesamtgewicht von Teil (B), vorliegt.

12. Kit nach einem vorstehenden Anspruch, wobei der wärmeleitende Füllstoff ausgewählt ist aus Aluminiumoxid, Aluminiumtrihydrat oder Aluminiumtrihydroxid, Siliciumcarbid, Bornitrid, Diamant und Graphit oder Mischungen davon, wobei der wärmeleitende Füllstoff vorzugsweise ATH ist und/oder wobei der wärmeleitende Füllstoff eine bimodale Partikelgrößenverteilung aufweist, die durch ein Verhältnis von D90 / D50 von etwa 3 oder mehr gekennzeichnet ist, und/oder wobei der wärmeleitende Füllstoff in einer Menge von 60 bis 90 Gew.-% in einer Mischung vorhanden ist, die durch Mischen der Teile (A) und (B) erhalten wird.

13. Ausgehärteter, wärmeleitender Klebstoff, der durch Mischen von Teil (A) und (B) nach einem vorstehenden Anspruch und anschließendes Aushärten der Mischung erhalten wird, wobei die Inhaltsstoffe vorzugsweise in folgenden Konzentrationen vorliegen:
| **Inhaltsstoff** | **Bevorzugt (Gew.- %)** | **Bevorzugter (Gew.-%)** | **Besonders bevorzugt (Gew.- %)** |
|---|---|---|---|
| (a1) blockiertes Polyurethan-Präpolymer | 0,1-5 | 0,25-2,5 | 0,5-2 |
| (a2) aromatisches Epoxidharz | 0,1-5 | 0,2-4 | 0,4-1 |
| (a3) Epoxysilan | 0,1-1 | 0,2-0,8 | 0,3-0,6 |
| (b1) nukleophiler Vernetzer | 0,2-5 | 0,3-4 | 0,5-2 |
| (b2) Katalysator | 0,01-0,5 | 0,03-0,3 | 0,05-0,15 |

14. Batteriebaugruppe, umfassend Batteriemodule, die in der Baugruppe durch eine ausgehärtete Klebstoffzusammensetzung, die durch Mischen von Teil (A) und (B) nach einem der Ansprüche 1 bis 12 erhalten wird, vor Ort fixiert sind, und gegebenenfalls mechanische Befestigungsmittel, so dass die Klebstoffzusammensetzung eine Wärmeleitfähigkeit zwischen den Batteriemodulen und einem Kühlsubstrat bereitstellt.

15. Verfahren zum Zusammenbauen einer Batteriebaugruppe, umfassend die folgenden Schritte:
(1) Mischen von Teil (A) und (B) nach einem der Ansprüche 1 bis 12 zum Herstellen eines gemischten Klebstoffs; und
(2) Aufbringen des gemischten Klebstoffs zum Fixieren der Batteriemodule vor Ort und Bereitstellen von Wärmeleitfähigkeit.

## Revendications

1. Kit pour une formulation adhésive thermoconductrice à deux composants comprenant :
(A) une première partie, comprenant :
(a1) un prépolymère de polyuréthane bloqué qui est le produit de la réaction d'un polyisocyanate avec un polyol, coiffé d'un phénol ;
(a2) une résine époxy aromatique ;
(a3) un époxysilane ;
(B) une seconde partie, comprenant :
(b1) un agent réticulant nucléophile capable de réagir avec le prépolymère de polyuréthane bloqué (a1) et la résine époxy aromatique (a2) ;
(b2) un catalyseur capable de promouvoir la réaction du nucléophile (b1) avec le prépolymère de polyuréthane bloqué (a1) et la résine époxy aromatique (a2) ;
dans lequel la partie (A) et/ou la partie (B) comprennent en outre une charge thermoconductrice, et les parties (A) et (B) sont conçues pour être mélangées avant utilisation.

2. Kit selon la revendication 1, dans lequel le prépolymère de polyuréthane bloqué (a1) est fabriqué en faisant réagir un diisocyanate aromatique avec un polyéther polyol et en coiffant avec un phénol, de préférence dans lequel le prépolymère de polyuréthane bloqué (a1) est fabriqué en faisant réagir du TDI avec du poly(oxyde de propylène)diol et en coiffant avec du cardanol.

3. Kit selon la revendication 1 ou 2, dans lequel le prépolymère de polyuréthane bloqué (a1) est présent à une teneur de 1 à 3 % en poids, sur la base du poids total de la partie (A).

4. Kit selon une quelconque revendication précédente, dans lequel la résine époxy aromatique (a2) est un produit de réaction d'un diphénol avec de l'épichlorhydrine, de préférence dans lequel la résine époxy aromatique (a2) est un produit de réaction du bisphénol A avec de l'épichlorhydrine.

5. Kit selon une quelconque revendication précédente, dans lequel la résine époxy aromatique (a2) est présente à une teneur de 0,6 à 1,5 % en poids, sur la base du poids total de la partie (A).

6. Kit selon une quelconque revendication précédente, dans lequel l'époxysilane (a3) présente la formule suivante : 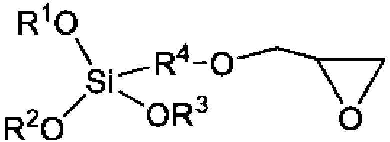 où R¹, R² et R³ sont choisis indépendamment parmi les alkyles en C₁-C₃, et R⁴ est un radical organique divalent, de préférence dans lequel l'époxysilane (a3) est le gamma-glycidoxypropyltriméthoxysilane.

7. Kit selon une quelconque revendication précédente, dans lequel l'époxysilane (a3) est présent à une teneur de 0,25 à 0,6 % en poids, sur la base du poids total de la partie A.

8. Kit selon une quelconque revendication précédente, dans lequel l'agent réticulant nucléophile (b1) est choisi parmi les diamines, les triamines et les mélanges de celles-ci, de préférence dans lequel l'agent réticulant nucléophile (b1) est une diamine présentant un squelette basé sur des poly(oxyde d'alkylène)diols d'alkylène en C₂-C₆, plus préférentiellement dans lequel l'agent réticulant nucléophile (b1) est une triamine d'un poids moléculaire d'environ 3000 Da et présentant un squelette basé sur du poly(oxyde de propylène)diol.

9. Kit selon une quelconque revendication précédente, dans lequel l'agent réticulant nucléophile (b1) est présent à une teneur de 1,5 à 3,3 % en poids, sur la base du poids total de la partie (B).

10. Kit selon une quelconque revendication précédente, dans lequel le catalyseur (b2) est choisi parmi les amines tertiaires, y compris diazabicyclo[2.2.2]octane, 2,4,6-tris((diméthylamino)méthyl)phénol, triéthanolamine, DMDEE (2,2'-dimorpholinodiéthyléther), polyéthylèneimine et imidazoles, tels que 4-méthylimidazole, de préférence dans lequel le catalyseur (b2) est diazabicyclo[2.2.2]octane.

11. Kit selon une quelconque revendication précédente, dans lequel le catalyseur (b2) est présent à une teneur de 0,075 à 0,15 % en poids, sur la base du poids total de la partie (B).

12. Kit selon une quelconque revendication précédente, dans lequel la charge thermoconductrice est choisie parmi l'alumine, l'oxyde d'aluminium, le trihydrate d'alumine ou le trihydroxyde d'aluminium, le carbure de silicium, le nitrure de bore, le diamant et le graphite, ou des mélanges de ceux-ci, de préférence dans lequel la charge thermoconductrice est de l'ATH, et/ou dans lequel la charge thermoconductrice présente une distribution granulométrique bimodale **caractérisée par** un rapport D90 / D50 d'environ 3 ou plus, et/ou dans lequel la charge thermoconductrice est présente à une teneur de 60 à 90 % en poids dans un mélange résultant du mélange des parties (A) et (B).

13. Adhésif thermoconducteur durci, résultant du mélange des parties (A) et (B) selon une quelconque revendication précédente, et du durcissement du mélange, dans lequel de préférence les ingrédients sont aux teneurs suivantes :
| **Ingrédient** | **Préférée (% en poids)** | **Plus préférée (% en poids)** | **Plus particulièrement préférée (% en** |
|---|---|---|---|
| (a1) prépolymère de polyuréthane bloqué | 0,1-5 | 0,25-2,5 | 0,5-2 |
| (a2) résine époxy aromatique | 0,1-5 | 0,2-4 | 0,4-1 |
| (a3) époxysilane | 0,1-1 | 0,2-0,8 | 0,3-0,6 |
| (b1) agent réticulant nucléophile | 0,2-5 | 0,3-4 | 0,5-2 |
| (b2) catalyseur | 0,01-0,5 | 0,03-0,3 | 0,05-0,15 |

14. Ensemble de batterie comprenant des modules de batterie fixés en place dans l'ensemble par une composition adhésive durcie résultant du mélange des parties (A) et (B), selon l'une quelconque des revendications 1 à 12, et éventuellement des moyens de fixation mécaniques, de sorte que la composition adhésive assure la conductivité thermique entre les modules de batterie et un substrat de refroidissement.

15. Procédé d'assemblage d'un ensemble de batterie, comprenant les étapes :
(1) le mélange des parties (A) et (B), selon l'une quelconque des revendications 1 à 12, pour produire un adhésif mélangé ; et
(2) l'application de l'adhésif mélangé pour fixer les modules de batterie en place et assurer la conductivité thermique.
